# DEMANDE DE BREVET EUROPEEN

(11) **EP 2 229 833 A1**
(43) Date de publication de la demande: **22.09.2010**
(21) Numéro de dépôt: 10290101.4
(22) Date de dépôt: 01.03.2010
(51) Int. Cl.: A43B 13/18, A43B 21/26, A41D 17/00, A41D 19/015, A61H 3/02, A01L 7/02, F16F 15/00

(54) **Procédé et dispositif d'atténuation et de filtrage des vibrations transmises à un utilisateur par une chaussure**

(30) Priorité: 04.03.2009 FR 0900971
(71) Demandeur: -CAP-K Technologies, 31840 Seilh (FR); ISMANS (Institut Supérieur des Matériaux et Mécaniques Avancés), 72000 Le Mans (FR)
(72) Inventeur: Capdepuy, Marc, 31840 Seilh (FR); Le Mehaute, Alain, 72000 Lemans (FR)
(74) Mandataire: Célanie, Christian

(57) **Abrégé**

L'invention concerne un procédé et un dispositif d'atténuation et de filtrage des vibrations transmises à un utilisateur par une chaussure lors de son utilisation, situé dans ladite chaussure entre la semelle intérieure (1) en contact avec le pied de l'utilisateur, et la semelle extérieure rigide (2) ou talon rigide en contact avec le sol.

Le dispositif est constitué d'au moins un élément élastique (4) fonctionnant en compression et d'au moins un élément dissipatif (3) composé d'un matériau convertisseur d'énergie et fonctionnant en cisaillement et/ou en compression, l'élément élastique (4) peut être constitué par un ressort, une lame élastique ou par une pièce en mousse de polymère ou de caoutchouc (5) et l'élément dissipatif (3) peut être constitué par un matériau convertisseur d'énergie mécanique en énergie thermique, en énergie électrique, en énergie magnétique ou en énergie surfacique.

Application à la fabrication des chaussures.

## Description

Le secteur technique de la présente invention est celui des dispositifs d'amortissement des chocs d'une semelle ou talon de chaussure sur le sol.

Il est bien connu que le pied d'un utilisateur subit des agressions au cours des activités de course, de marche ou de saut. Durant, ces activités, les chocs répétés lors du contact de la semelle, en particulier le talon, sur le sol engendrent deux types d'énergie. On parle communément d'énergie négative qui cause les dégâts et que des moyens appropriés devraient dissiper et d'énergie positive qui est restituée par la semelle et qui participe à la propulsion de l'utilisateur pour le pas suivant. Il est donc important de réduire voir d'éliminer l'énergie négative.

Par ailleurs, les chaussures doivent assurer plusieurs fonctions :
- protéger les pieds de toutes les agressions extérieures,
- maintenir les pieds en permettant une position correcte du corps dans l'espace,
- garantir une bonne stabilité des pieds et donc du corps par rapport au sol,
- limiter les nuisances liées aux déplacements, dans le meilleur confort.

On a déjà intégré des dispositifs d'amortissement dans les semelles de chaussure consistant la plupart du temps à incorporer principalement dans le talon une couche d'élastomère ou de mousse afin d'absorber une partie des chocs, essentiellement par filtrage. Les matériaux élastomères possédant des propriétés viscoélastiques se présentent généralement sous la forme d'une masse compacte travaillant en compression dans la zone d'implantation. De tels matériaux sont décrits dans les brevets WO01/283 WO88/08677, WO88/08678, WO92/08384, WO96/18317, WO97/46127, WO98/07343, WO95/03719, WO2006/038338, WO2006/038357 et WO2006/120749.

La plupart des matériaux sont des caoutchoucs, des néoprènes, des polyuréthanes en masse ou en mousse. Ce genre de matériau présente l'inconvénient d'être très peu adaptable à chaque utilisateur. Les semelles et/ou talons utilisant ce type de matériaux ont donc une raideur faible pour obtenir un filtrage suffisant. Dans ce cas, la chaussure ne garantit pas une bonne stabilité des pieds et donc du corps de l'utilisateur par rapport au sol. Les fonctions cérébrales du gyroscope humain vont chercher à compenser cette instabilité dans l'espace par de multiples actions musculaires qui à la longue génèrent certaines pathologies médicales.

On a également proposé d'insérer des matériaux de type gel incorporés dans une enveloppe élastique transparente qui laisse entrevoir le produit incorporé sur le champ de la semelle extérieure. Les brevets WO2005/023036 et WO2008/047538 illustrent des réalisations de ce type. L'inconvénient de ces moyens réside dans la bonne adéquation à trouver entre l'enveloppe et le gel.

On a encore proposé des matériaux de type fluide gazeux ou liquide, enfermés dans une ou plusieurs enceintes. Les brevets WO2001/70060, WO2001/70062, WO2001/70064 ou WO1996/39884 décrivent de telles tentatives qui n'ont pas donné lieu jusqu'à maintenant à des réalisations concrètes.

Les différents concepts concernant le maintien du pied, sa stabilité, le guidage durant la foulée, lorsqu'ils sont associés aux concepts amortissant, sont réputés pour agir en synergie avec ces derniers. Souvent, ces artifices permettent en fait de compenser les effets pervers des semelles amortissantes, qui favorisent en particulier l'hyper pronation.

Quatre notions d'actions différentes ont donné lieu dans ce domaine à de multiples développements.

En premier lieu, le maintien en torsion de la semelle qui est assuré par une rigidification dans la zone du médio-pied, est censé protéger le pied durant la phase de torsion de la foulée.

En second lieu le contrôle de la pronation par l'ossature rigide au niveau de l'arche plantaire où sur le bord interne de la semelle intermédiaire et la variation progressive ou franche de la densité de la semelle intermédiaire, et bien entendu des combinaisons des deux concepts précédents : ossature rigide et variations de densité.

En troisième lieu, la facilitation de la foulée par l'accompagnement du déroulé qui est en général traité par la réalisation d'encoches de flexion, ou de faiblesses judicieusement positionnées.

Enfin, la meilleure adaptation à l'anatomie du pied par un système de chausson englobant la cheville, par la réalisation de la semelle et de la tige en plusieurs parties.

Tous ces concepts pour atténuer les effets négatifs de l'impact de pied, au travers de la chaussure, sur le sol, utilisent les propriétés des matériaux constituant la semelle. Par contre, et pour obtenir de bonnes performances, ces matériaux devront être peu raide c'est-à-dire très déformable, ce qui présente l'inconvénient en terme de stabilité de l'organisme humain par rapport au sol.

Pour obtenir des performances bien meilleures en terme d'atténuation, la présente invention va utiliser et optimiser les caractéristiques de filtrage et/ou d'amortissement par l'utilisation de procédés et de dispositifs utilisant une géométrie spécifique et en combinaison avec les propriétés de matériaux. Par ailleurs, la présente invention va permettre, en plus d'atténuer le choc au moment de l'impact sur le sol, de conserver une raideur suffisante pour garantir la stabilité de l'organisme humain par rapport au sol. Cela est très important notamment pour les chaussures de ville. L'utilisation de talons hauts, impose une raideur importante pour garantir cette stabilité. Pour cela, il est nécessaire de conserver au niveau des talons une enveloppe rigide au niveau des parois latérales et de la semelle en contact avec le sol. L'appui du pied sur la semelle intérieure de la chaussure permet un enfoncement contrôlé. Pour conserver une raideur importante, il est nécessaire d'avoir un fort amortissement avec un faible débattement.

Le but de la présente invention est de fournir un procédé de filtrage et d'atténuation des vibrations des ondes de choc d'une chaussure transmises au pied d'un utilisateur, assurant un bon amortissement de ces vibrations par l'élimination de l'énergie négative et en permettant l'utilisation complète de l'énergie positive.

Un autre but de l'invention est de fournir un dispositif d'amortissement intégrable dans le talon d'une chaussure permettant la conversion des phénomènes vibratoires transitoires lors des impacts de la chaussure sur le sol.

L'invention a donc pour objet un procédé d'atténuation et de filtrage des vibrations transmises à un utilisateur par une chaussure lors de son utilisation, **caractérisé en ce qu**'on interpose entre la semelle intérieure de ladite chaussure en contact avec le pied de l'utilisateur, et la semelle extérieure rigide en contact avec le sol lors de la marche, au moins un élément élastique et au moins un élément dissipatif afin d'atténuer les déplacements relatifs entre les deux semelles, pour assurer d'une part une fonction statique garantissant la rigidité de la semelle, et d'autre part une fonction dynamique donnant des caractéristiques d'amortissement non linéaire dépendant du niveau d'effort appliqué sur la semelle lors du contact sur le sol.

Avantageusement, le procédé est appliqué à l'atténuation et au filtrage des vibrations entre les semelles intérieure et extérieure d'une chaussure.

Avantageusement encore, le procédé est appliqué à l'atténuation et au filtrage des vibrations dans une guêtre, dans un gant ou dans une béquille.

L'invention concerne également un dispositif d'atténuation et de filtrage des vibrations transmises à un utilisateur par une chaussure lors de son utilisation, situé dans ladite chaussure entre la semelle intérieure en contact avec le pied de l'utilisateur, et la semelle extérieure à forte raideur en contact avec le sol, **caractérisé en ce qu**'il est constitué d'au moins un élément élastique fonctionnant en compression et d'au moins un élément dissipatif composé d'un matériau convertisseur d'énergie et fonctionnant en cisaillement et/ou en compression.

Selon une caractéristique du dispositif, l'élément élastique est constitué par un ressort, une lame élastique ou une pièce en mousse de polymère ou de caoutchouc.

Selon une autre caractéristique du dispositif, l'élément dissipatif est constitué par un matériau convertisseur d'énergie mécanique en énergie thermique, en énergie électrique, en énergie magnétique ou en énergie surfacique.

Selon encore une autre caractéristique du dispositif, le matériau convertisseur d'énergie est constitué de matériaux viscoélastiques ou viscoplastiques, de matériaux piézoélectriques, de matériaux magnétostrictifs ou de matériaux nanoporeux.

Selon encore une autre caractéristique du dispositif, l'élément élastique et l'élément dissipatif sont placés l'un par rapport à l'autre selon une direction quelconque.

Selon encore une autre caractéristique du dispositif, l'élément dissipatif est placé en biais par rapport à l'axe vertical de la chaussure correspondant à l'axe de la jambe de l'utilisateur afin de générer une raideur non-linéaire du dispositif en fonction de l'effort appliqué par le pied.

Selon encore une autre caractéristique du dispositif, l'élément élastique et l'élément dissipatif sont chacun fixés séparément à la semelle intérieure et à la semelle extérieure.

Selon encore une autre caractéristique du dispositif, l'élément élastique est fixé entre la semelle intérieure et la semelle extérieure, et l'élément dissipatif est fixé à la semelle extérieure et à l'élément élastique.

Selon encore une autre caractéristique du dispositif, l'élément élastique et l'élément dissipatif sont fixés l'un à l'autre entre la semelle intérieure et à la semelle extérieure.

Selon encore une autre caractéristique du dispositif, l'élément élastique est fixé à la semelle intérieure et à la semelle extérieure et l'élément dissipatif est fixé entre la semelle intérieure et l'élément élastique.

Selon encore une autre caractéristique du dispositif, l'élément élastique et l'élément dissipatif sont fixés chacun entre la semelle intérieure et la semelle extérieure.

Selon encore une autre caractéristique du dispositif, l'élément élastique est fixé entre la semelle intérieure et la semelle extérieur, l'élément dissipatif étant solidaire uniquement de l'élément élastique.

Selon encore une autre caractéristique du dispositif, l'élément élastique est fixé uniquement à la semelle extérieure, l'élément dissipatif étant fixé uniquement entre l'élément élastique et la semelle intérieure.

Selon encore une autre caractéristique du dispositif, l'élément élastique génère une composante de déplacement dans une direction différente de l'enfoncement du pied de l'utilisateur, en sorte que la hauteur du dispositif soit limitée dans la structure du talon ou de la semelle.

Selon encore une autre caractéristique du dispositif, l'élément élastique génère un déplacement d'une partie de cet élément dans une direction perpendiculaire à l'enfoncement du pied de l'utilisateur, de façon à faire travailler l'élément dissipatif en cisaillement dans cette direction, mais aussi en compression ce qui génère une raideur non linéaire du dispositif, celle-ci augmentant en fonction de l'effort appliqué par le pied.

L'élément élastique génère une composante de déplacement dans une direction différente de l'enfoncement du pied de l'utilisateur, en sorte que la hauteur du dispositif soit limitée dans la structure du talon ou de la semelle.

L'élément élastique génère un déplacement d'une partie de cet élément dans une direction perpendiculaire à l'enfoncement du pied de l'utilisateur, de façon à faire travailler l'élément dissipatif (3) en cisaillement dans cette direction, mais aussi en compression ce qui génère une raideur non linéaire du dispositif, celle-ci augmentant en fonction de l'effort appliqué par le pied.

Un tout premier avantage de l'invention réside dans la protection du pied de l'utilisateur de la chaussure en réduisant les pathologies articulaires et musculaires.

Un autre avantage de l'invention réside dans le maintien du pied en assurant une position correcte du corps de l'utilisateur dans l'espace.

Un autre avantage encore de l'invention réside dans une stabilité parfaite du pied de l'utilisateur et donc du corps par rapport au sol.

Un autre avantage encore de l'invention réside dans la réduction des nuisances liées aux déplacements de l'utilisateur.

D'autres caractéristiques, détails et avantages de l'invention seront mieux compris à la lecture du complément de description qui va suivre de modes de réalisation donnés à titre d'exemple sur lesquels :
- les figures 1 à 3 représentent des vues en coupe longitudinale du talon d'une chaussure suivant un premier mode de réalisation du dispositif selon l'invention,
- les figures 4 à 10 représentent des vues en coupe longitudinale du talon d'une chaussure suivant un second mode de réalisation de l'invention,
- les figures 11 à 13 représentent des vues en coupe longitudinale du talon d'une chaussure selon un autre mode de réalisation de l'invention, et
- les figures 14 à 18 représentent des vues en coupe longitudinale du talon d'une chaussure selon encore un autre mode de réalisation de l'invention.

La demanderesse a eu l'idée d'appliquer les principes décrits dans ces brevets au traitement des phénomènes vibratoires transitoires tour à fait différents se produisant dans les chaussures afin d'améliorer le confort de l'utilisateur.

On distingue plusieurs états lors de l'utilisation des chaussures :
- l'état statique dans lequel l'utilisateur est en position arrêtée. Dans ce cas, il est dans une position stable, le plus souvent avec des efforts répartis sur les deux pieds, et il doit y rester. La chaussure, qui assure la liaison entre le corps humain et le sol, doit donc être très rigide pour conserver un bon référentiel dans l'espace. Une liaison trop souple générerait une instabilité que le corps humain chercherait à compenser naturellement, d'où une activité cérébrale, musculaire et un travail des articulations inutile.
- l'état de déplacement de type « marche », correspondant à une cinématique du corps humain. Pour conserver une bonne stabilité latérale, un bon maintien doit être assuré entre la chaussure et le pied. L'impact lors de la marche entre la chaussure et le sol va générer des efforts proportionnels à la masse en mouvement et la vitesse au moment de l'impact. Avec des chaussures rigides sur un sol dur, ces efforts se propageront dans le corps humain, avec des incidences sur les articulations, les tendons, et la colonne vertébrale.
- l'état de déplacement de type « course », correspondant à une cinématique encore plus contraignante sur le corps humain. La vitesse du choc au moment de l'impact de la chaussure sur le sol étant beaucoup plus importante, elle génère des efforts d'autant plus importants et donc des contraintes néfastes au corps humain.

Pour remédier à ces inconvénients, les solutions les plus couramment utilisées sont :
- l'utilisation de semelles souples qui va limiter la vitesse au moment de l'impact en modifiant la forme du choc. Ces semelles ont également un effet élastique qui restitue une partie de l'énergie cinétique,
- l'utilisation de semelles souples avec un effet amortissant et en partie élastique. Une partie de l'énergie liée au choc est absorbée par les matériaux amortissants,
- l'utilisation de sur-semelles intérieures souples dans des chaussures rigides comme des chaussures de villes.

Pour le corps humain, il faut donc répondre d'une part à un critère de rigidité pour garantir une bonne position dans l'espace, notamment dans les positions arrêtées où il est nécessaire d'avoir une bonne stabilité, et d'autre part à un critère d'absorption des énergies liées aux impacts sur le sol pour limiter les traumatismes éventuels notamment sur les articulations et la colonne vertébrale.

Le critère de rigidité est très important notamment pour les chaussures de ville. L'utilisation de talons hauts, impose une raideur importante pour garantir la stabilité.

Pour absorber ces énergies liées aux chocs lors des impacts, il est nécessaire d'avoir un déplacement entre le pied et le sol. Cela nécessite donc d'avoir une raideur faible au niveau de la chaussure. Cela est donc en contradiction avec le critère précédent.

Ces considérations conduisent à une chaussure qui soit :
- rigide à l'arrêt,
- à faible raideur ou raideur contrôlée lors des déplacements au moment de l'impact sur le sol.

Pour répondre à l'ensemble de ces critères, il est donc nécessaire d'avoir une raideur non linéaire, évolutive en fonction de l'utilisation des chaussures. Cela revient à avoir une structure de chaussure dont les raideurs statiques et dynamiques sont optimisées pour répondre aux précédents critères. C'est justement ce qui a conduit la demanderesse à s'intéresser à la transposition de la technique d'atténuation des vibrations dans le domaine nouveau des chaussures.

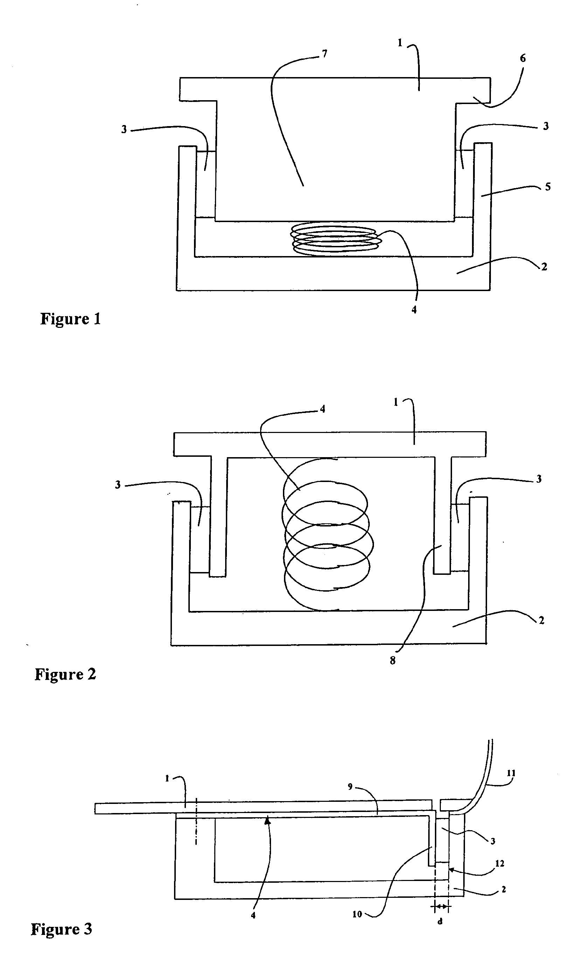

La figure 1 illustre schématiquement le procédé et le dispositif d'atténuation selon l'invention. On a schématisé le dispositif selon l'invention interposé entre une semelle intérieure 1 sur laquelle repose le pied d'un utilisateur et une semelle extérieure 2 d'une chaussure en contact avec le sol lors de la marche. De façon générale, la semelle extérieure 2 se présente sous la forme d'un godet muni d'une paroi latérale 5 de forme quelconque, par exemple circulaire, rectangulaire ou autres. La semelle intérieure 1 peut se prolonger par un rebord 6 faisant office de butée pour limiter l'enfoncement. La semelle intérieure 1 se prolonge par un sous ensemble 7 faisant office de piston et dont les bords sont de préférence parallèles à ceux des parois 5. Le piston 7 est destiné à s'engager dans la semelle extérieure. L'espace entre le piston 7 et les parois 5 est occupé par un matériau 3 déformable adhérisé de part et d'autre. Enfin, un élément élastique 4 est interposé entre le piston 7 et le fond de la semelle 2 en étant comprimé à chaque pression de l'utilisateur selon une direction générale de haut en bas.

Bien entendu, on pourrait prévoir une disposition inverse dans laquelle c'est la semelle externe 2 qui s'engagerait dans la semelle intérieure sans en modifier le fonctionnement.

Ainsi, lorsque l'utilisateur se déplace, la semelle intérieure 1 va se rapprocher de la semelle extérieure en agissant simultanément sur le matériau 3 emprisonné et l'élément élastique 4 jusqu'à ce que de manière extrême le rebord 6 de la semelle extérieure viennent en contact avec le bord libre de la paroi 5 de la semelle extérieure.

On comprend que la fonction filtrage est réalisée par l'ensemble constitué par la masse de l'utilisateur appliquée sur la semelle intérieure 1 et l'élément élastique 4 et que la fonction amortissement, c'est-à-dire la conversion de cette énergie, est réalisée par cisaillement du matériau 3 lors du déplacement relatif entre les deux semelles 1 et 2.

Le matériau 3 est un élément dissipatif de l'énergie et l'élément élastique 4 reliant les deux semelles peut être un ressort comprimable ou tout autre élément élastique fonctionnant en compression.

L'élément dissipatif 3 est fixé entre les parois latérales du piston 7 de la semelle intérieure 1 et la semelle extérieure 2. Cet élément 3 est adhérisé aux deux parois en vis-à-vis. Cet élément dissipatif 3 est constitué par exemple d'un matériau viscoélastique comme par exemple des matériaux de type Butyl, Acrylique, Silicone, caoutchouc synthétique ou naturel, ...

L'élément élastique 4 est constitué ici par un ressort hélicoïdal fixé d'un côté à la semelle intérieure 1 et de l'autre à la semelle extérieure 2, ledit ressort étant sensiblement disposé perpendiculairement aux deux semelles. Ce ressort est par exemple constitué d'un matériau métallique, composite ou plastique et cela quelle que soit sa forme. Cet élément élastique peut être remplacé par un élément en mousse ou caoutchouc ou par une combinaison de ces différents matériaux afin d'obtenir une raideur non-linéaire qui augmente en fonction de l'enfoncement.

Le fonctionnement du dispositif selon l'invention est le suivant. Lorsque l'utilisateur applique une pression sur l'intérieur de la chaussure, la semelle intérieure 1 va se rapprocher de la semelle extérieure 2, ce qui va provoquer la compression de l'élément élastique 4 et le cisaillement de l'élément dissipatif 3. Ainsi, la réponse au choc de la semelle sur le sol va être atténuée par la combinaison de cette compression et de ce cisaillement. La réponse dynamique de l'ensemble va être modifiée et l'énergie ainsi engendrée est alors absorbée par le matériau dissipatif assurant ainsi une atténuation par amortissement de l'énergie négative comme cela a été expliqué ci-dessus. Lorsque l'utilisateur libère l'effort sur la semelle, l'élément élastique 4 tend à revenir à sa position initiale en induisant de manière concomitante avec l'élément dissipatif une énergie positive qui engendra un effort sous le pied de l'utilisateur.

Sur la figure 2, on a représenté une variante de réalisation du dispositif d'atténuation et de filtration dans laquelle la semelle intérieure 2 est prolongée par une juge 8 globalement tubulaire, les autres éléments, l'élément dissipatif 3, le ressort 4, étant disposés de manière similaire à la disposition selon la figure 1. Les fonctions de filtrage et d'amortissement sont réalisées de la même manière. Le fonctionnement est identique à celui décrit en relation avec la figure 1.

La figure 3 illustre un autre mode de réalisation du dispositif selon l'invention. La semelle extérieure 2 du talon de la chaussure se présente comme précédemment sous la forme d'un godet sur lequel vient reposer dans sa partie supérieure la semelle intérieure 1. Dans cette réalisation, l'élément élastique 4 se présente sous la forme d'une lame élastique en forme de « L » comportant une branche élastique 9 et une branche courte 10. La branche 9 est solidaire de la partie avant du talon. La branche courte 10 est disposée parallèlement à la paroi latérale interne 12 de la partie arrière du talon au niveau du contrefort 11 de la chaussure, de façon à laisser un espace libre de largeur (d) entre elles. La lame élastique 4 est par exemple réalisée en matériau métallique, composite ou plastique.

Sur la figure 3, on voit que l'élément dissipatif 3, disposé dans l'espace libre, est adhérisé sur la branche courte 10 de la lame élastique et sur la paroi latérale interne 12 de la partie arrière du talon. Cet élément dissipatif 3 est par exemple constitué d'un matériau viscoélastique. Dans cette réalisation, en réaction aux forces exercées lors de l'impact sur le sol par l'utilisateur, l'élément élastique 4 fonctionne en flexion et l'élément dissipatif 3 fonctionne en cisaillement. Le fonctionnement est identique à celui décrit en relation avec la figure 1 à l'exception du ressort qui travaille en flexion.

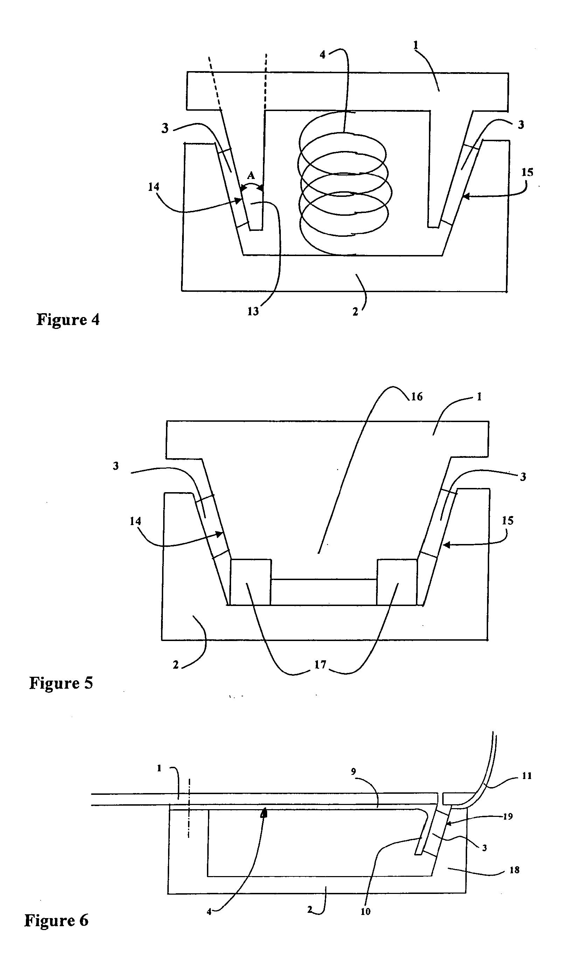

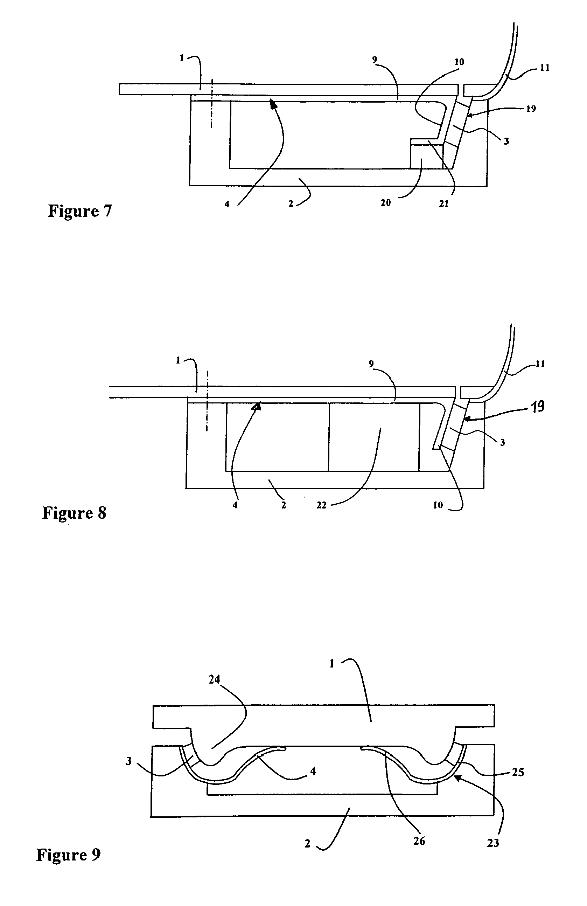

Le dispositif selon l'invention peut être réalisé en complétant la fonction amortissement (conversion de l'énergie) par une fonction non linéaire dont le rôle est d'augmenter la raideur du talon en fonction du déplacement relatif de la semelle intérieure 1 par rapport à la semelle extérieure 2, correspondant à un enfoncement du pied en appui sur la semelle intérieure 1. Le matériau 3 travaille alors en cisaillement et en compression. Le déplacement s'effectue suivant une direction inclinée par rapport à l'axe vertical comme cela va être décrit en relation avec les figures 4 à 10. Dans les réalisations illustrées par ces figures, l'élément élastique 4 fonctionne là aussi en compression (figures 4, 5, 9, 10), en flexion (figures 6) ou une combinaison flexion/compression (figures 7, 8). La différence est ici la position en biais de l'élément dissipatif 3 qui permet à celui-ci de fonctionner en cisaillement, mais aussi partiellement en compression, induisant ainsi une raideur non-linéaire en fonction de l'enfoncement.

Ainsi, sur la figure 4, la semelle intérieure 1 est prolongée par une jupe 13 dont la paroi latérale externe 14 est inclinée par rapport à une direction verticale. La paroi latérale interne 15 de la semelle extérieure 2 présente un profil identique à celui de la paroi externe 14 en ménageant un espace libre dans lequel l'élément dissipatif 3 est adhérisé contre lesdites parois 14 et 15. L'angle A d'inclinaison peut être compris entre 10 et 80° et sera calculé au cas par cas en fonction du degré de raideur recherché, de l'utilisateur, etc.... Dans cette réalisation, l'élément élastique 4 est un ressort.

On comprend que l'élément élastique 4 génère une composante de déplacement dans une direction différente de l'enfoncement du pied de l'utilisateur, en sorte que la hauteur du dispositif soit limitée dans la structure du talon ou de la semelle.

Sur la figure 5, les deux semelles 1 et 2 présentent comme précédemment des parois en vis-à-vis inclinées entre lesquelles le matériau 3 est adhérisé. La semelle intérieure 1 est prolongée par un piston central 16 dont la paroi externe 14 est inclinée, la semelle extérieure 2 présentant une structure identique à celle représentée sur la figure 4. Ici, l'élément élastique est constitué d'une couche de matériau 17 de type mousse ou caoutchouc ou une combinaison de ces différents matériaux afin d'obtenir une raideur non-linéaire qui augmente en fonction de l'enfoncement.

On comprend encore que l'élément élastique 17 génère un déplacement d'une partie de cet élément dans une direction perpendiculaire à l'enfoncement du pied de l'utilisateur, de façon à faire travailler l'élément dissipatif 3 en cisaillement dans cette direction, mais aussi en compression ce qui génère une raideur non linéaire du dispositif, celle-ci augmentant en fonction de l'effort appliqué par le pied.

Sur la figure 6, on a représenté un autre mode de réalisation du dispositif selon l'invention dans lequel le matériau 3 travaille en cisaillement et en compression, l'élément élastique 4 se présentant sous la forme d'une lame élastique, par exemple réalisée en matériau métallique, composite ou plastique. Ainsi, la semelle extérieure 2 du talon de la chaussure se présente comme précédemment sous la forme d'un godet rigide sur lequel vient reposer la semelle intérieure 1. L'élément élastique 4 se présente sous la forme d'une lame élastique en forme de « L » comportant une branche élastique 9 et une branche courte 10. La branche 9 est solidaire de la partie avant du talon. La branche courte 10 est disposée angulairement par rapport à la verticale. La partie arrière extrême 18 de la semelle extérieure 2 présente une paroi latérale interne 19 inclinée et parallèlement à la branche courte 11 en laissant un espace libre entre elles dans lequel le matériau 3 est adhérisé sur la branche courte 10 de la lame élastique et à la paroi latérale interne 19 de la partie arrière du talon.

La figure 7 illustre une variante de réalisation du mode décrit en relation avec la figure 6 dans laquelle l'élément élastique est constitué soit uniquement par une couche d'élastomère 20, soit par une combinaison de la lame élastique 4 et une couche d'élastomère 20, pour réaliser le filtrage. Ici, la branche courte 10 de l'élément élastique 4 est prolongée par une plaque 21, le matériau 20 étant alors disposé entre le fond de la semelle extérieure 2 et ladite plaque 21. Les autres éléments du dispositif sont identiques à ceux décrits en relation avec la figure 6.

La figure 8 illustre une variante de réalisation du mode décrit en relation avec la figure 6 dans laquelle l'élément élastique est constitué soit uniquement par une couche d'élastomère 22, soit par une combinaison de la lame élastique 4 et une couche d'élastomère 22, pour réaliser le filtrage. Ici, le matériau 22 est disposé entre le fond de la semelle extérieure 2 et la branche longue 9 de l'élément élastique 4. Les autres éléments du dispositif sont identiques à ceux décrits en relation avec la figure 6.

Sur la figure 9, on a représenté un autre exemple de réalisation du dispositif selon l'invention. La semelle extérieure 2 est ici en forme de godet plat dont la paroi tubulaire présente côté interne une échancrure 23 définissant une cuvette. La semelle intérieure 1 se prolonge côté interne par un bourrelet 24 dont la surface extérieure est similaire à la forme de l'échancrure 23 et s'engageant dans la semelle extérieure 2. L'élément élastique 4 se présente ici sous la forme d'une coupelle dont une partie 25 est fixée dans l'échancrure 23 et dont l'autre partie 26 est en appui contre la semelle intérieure 1. Le matériau dissipatif 3 est adhérisé entre la partie 25 et la surface extérieure du bourrelet 24. De cette manière, le matériau 3 travaille en cisaillement et en compression.

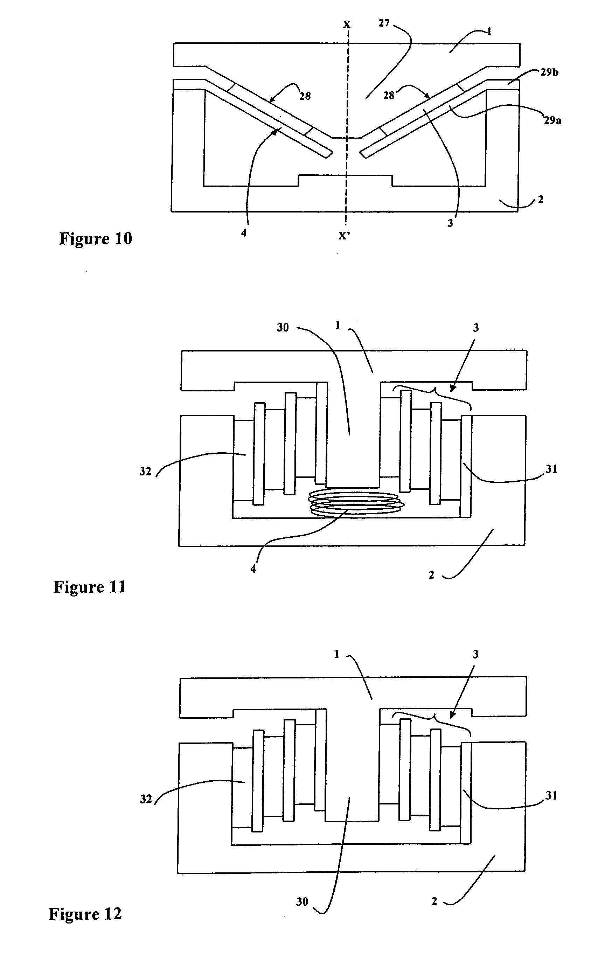

Sur la figure 10, on a représenté une autre variante de réalisation du dispositif selon l'invention. La semelle intérieure 1 se présente ici sous la forme d'un piston 27 massif tronconique qui s'engage dans la semelle extérieure 2 en forme de godet. Cette pièce tronconique 27 définit une paroi latérale 28. Dans cette réalisation, l'élément élastique 4 se présente sous la forme d'une lame élastique définissant une partie libre 29a et une partie fixe 29b solidaire uniquement de la semelle extérieure 2. Ladite partie libre 29a est disposée en biais par rapport à l'axe XX' de la chaussure et sensiblement parallèlement à la paroi latérale 28. La pièce 4 est fendue dans la partie 29a, de l'extérieur vers le centre pour constituer des pétales qui s'ouvrent par l'intérieur lors de l'enfoncement du piston 27. L'élément dissipatif 3 est ici intercalé entre la paroi latérale 28 de la semelle intérieure 1 et la partie libre 29a de la lame élastique 4.

Dans les dispositifs illustrés par les figures 4 à 10, afin de dissiper les énergies négatives générées par le choc de la chaussure sur le sol, l'élément élastique 4 fonctionne en compression ou en flexion et l'élément dissipatif 3 fonctionne en cisaillement mais aussi partiellement en compression afin de générer une raideur non linéaire.

Les figures 11 à 13 représentent différents modes de réalisation de la fonction ressort. La fonction amortissement est réalisée par cisaillement du matériau viscoélastique par déplacement parallèle entre la semelle intérieure et la semelle extérieure. La fonction non linéaire de l'amortissement est réalisée par un engagement progressif du matériau viscoélastique en fonction de l'enfoncement de la semelle intérieure.

Sur la figure 11, la semelle extérieure 2 se présente sous la forme d'un godet rigide et la semelle intérieure 1 sous la forme d'une plaque prolongée dans sa partie médiane par un piston central 30. L'élément élastique 4 sous forme de ressort est interposé entre l'extrémité du piston 30 et le fond de la semelle extérieure 2. L'élément dissipatif 3 se présente sous la forme d'un ensemble constitué d'une feuille métallique 31 enroulée en spirale hélicoïdale et d'un matériau amortissant 32 adhérisé entre les spires. La spire supérieure est fixée sur une partie de sa surface contre le piston 30 et la spire inférieure contre la paroi latérale de la semelle extérieure 2 sur une partie de sa surface.

La figure 12 représente une variante de réalisation du mode de réalisation de la figure 11 en ce que le ressort 4 est supprimé. La fonction ressort est alors intégrée dans la feuille 31 qui peut être alors métallique, de type acier à ressort. La feuille 31 est positionné comme précédemment.

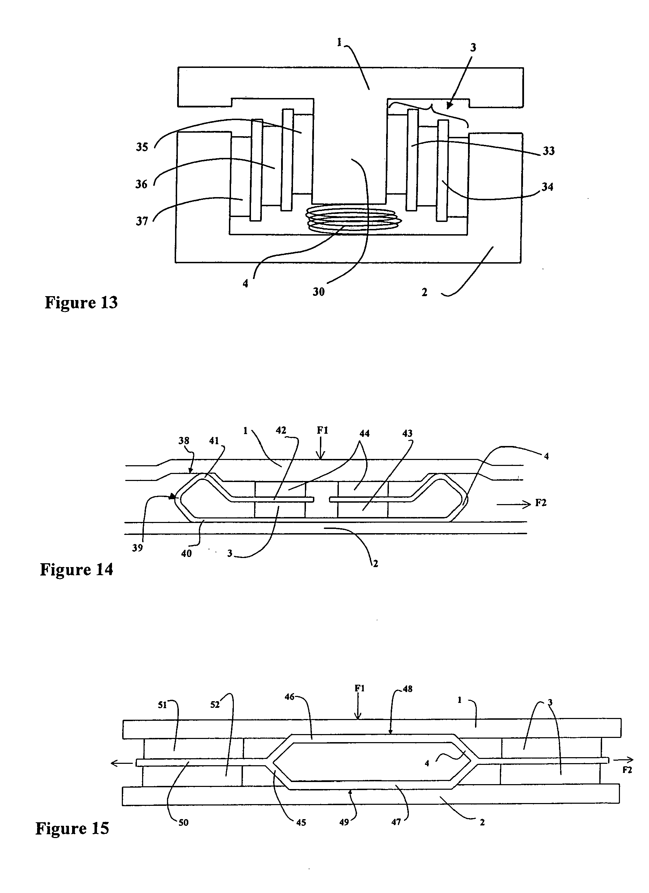

Sur la figure 13, on a représenté une variante de réalisation du dispositif selon la figure 11 dans laquelle l'élément dissipatif 3 est constitué d'une succession de couches de matériau viscoélastique sous la forme d'un silent block. On voit que l'élément 3 est constitué d'une première couche de matériau 35 adhérisé entre le pivot 30 et un premier tube 33, une seconde couche 36 adhérisée entre le premier tube 33 et un second tube 34 et une troisième couche 37 adhérisée entre le second tube 34 et la paroi de la semelle extérieure 2. Les éléments 33 et 34 sont sous forme de tubes, mais peuvent être sous forme de plaques.

Des variantes de réalisation des modes de réalisation selon des figures 11 à 13 peuvent être réalisées en inclinant les parois du piston et de la semelle extérieure comme décrit en relation avec les figures 4 à 10, l'élément dissipatif 3 fonctionne alors en cisaillement mais aussi partiellement en compression et génère également une raideur non linéaire lors de l'enfoncement de la semelle intérieure 1.

Sur les figures 14 à 18, on a représenté d'autres modes de réalisation de l'invention dans lesquels l'enfoncement de la semelle intérieure 1 suivant la flèche F1 engendre un déplacement perpendiculaire à la direction de la flèche. Le cisaillement du matériau viscoélastique se fait suivant la direction F2 sensiblement parallèlement au plan des semelles 1 et 2 à la place d'un axe perpendiculaire ou oblique.

Selon la réalisation représentée à la figure 14, Les semelles intérieure 1 et extérieure 2 sont ici en forme de lame, la semelle intérieure délimitant un logement 38. L'élément élastique 39 est une lame se présentant sous la forme d'une épingle comportant une partie plane 40 en appui contre la semelle rigide extérieure 2 et une boucle 41 formée par le bord retourné en épingle prolongée par une lèvre 42. La boucle 41 est appliquée au niveau de sa courbure dans le logement 38 de la semelle intérieure 1 afin de produire un effet ressort.

L'élément dissipatif 3 se présente sous la forme de plaques ou couronnes 43 et 44 situées de part et d'autre de la lèvre 42. En variante, l'élément dissipatif 3 peut être monobloc, la lèvre étant engagée traversant au sein de chacune des unités d'élément dissipatif.

Le mode de réalisation selon la figure 15 représente une autre variante de réalisation du dispositif selon l'invention. Ici, les semelles intérieure 1 et extérieure 2 se présentent sous la forme de plaques et l'élément élastique 4 est une cage élastique de forme particulière. Cette cage est constituée d'un cadre polygonal 45 dont deux faces parallèles 46 et 47 en appui respectivement dans les logements 48 et 49 des deux semelles. Le cadre 45 est prolongé de part et d'autre par une lèvre 50 orientée vers l'extérieur. L'élément dissipatif 3 se présente sous la forme de plaques ou galettes 51 et 52 fixées chacune entre les deux semelles et à la lèvre 50.

Lors de l'enfoncement selon la flèche F1, la semelle intérieure 1 provoque un aplatissement du cadre 45. Les branches 50 provoquent un déplacement latéral suivant la flèche F2, d'où un cisaillement des éléments 51 et 52 constituant l'élément dissipatif 3 et leur compression suivant la direction F1.

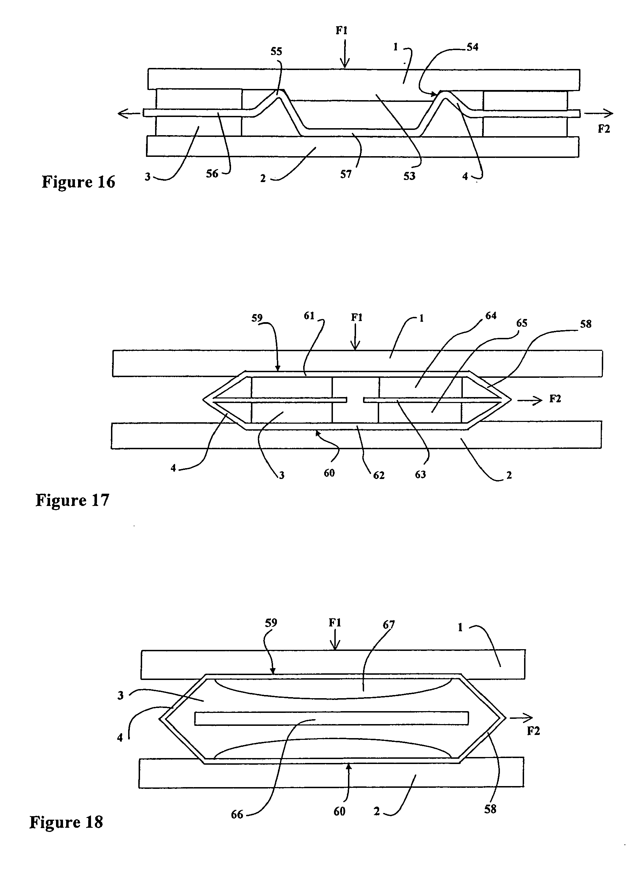

Sur la figure 16, on a représenté une autre variante de réalisation du dispositif selon l'invention. Les deux semelles 1 et 2 se présentent sous la forme de plaques. La semelle intérieure 1 présente un épaississement 53 au niveau de sa partie centrale définissant une butée 54. Dans cette réalisation, la lame élastique 4 se présente sous la forme d'une cuvette sous forme d'un U évasé dont le sommet circulaire 55 forme un « V » inversé et se prolongeant par une lèvre latérale 56. Le fond 57 de la cuvette est entièrement solidaire de la semelle rigide extérieure 2 et le sommet est appliqué contre la semelle intérieure 1 au niveau de la butée 54.

La structure de l'élément dissipatif 3 est identique à celle décrite en relation avec la figure 15 et le fonctionnement est identique.

La figure 17 illustre une autre variante de réalisation du dispositif selon l'invention. Dans cette réalisation, les deux semelles 1 et 2 se présentent sous la forme de plaques et l'élément élastique 4 forme une cage fermée aplatie 58, par exemple un hexagone. Les semelles intérieure 1 et extérieure 2 comportent les logements respectifs 59 et 60 dans lesquels les faces 61 et 62 en vis-à-vis de la cage 58 sont insérées. Les faces des éléments 61 et 62 sont alors solidaires respectivement des semelles intérieure 1 et extérieure 2. La cage 58 est munie vers l'intérieur de deux plaques 63. L'élément dissipatif 3 est ici incorporé dans la cage de part et d'autre de la plaque 63, et est constitué d'éléments séparés ou de deux galettes 64 et 65. Le fonctionnement est identique à celui du mode de réalisation de la figure 15 comme le montre les flèches F1 et F2.

La figure 18 représente une autre variante de réalisation du dispositif sensiblement équivalente à celle décrite à la figure 17, l'élément élastique 4 se présentant également sous la forme d'une cage fermée immobilisée dans les logements 59 et 60 des semelles 1 et 2. Ici, l'élément dissipatif 3 est adhérisé autour d'une plaque intermédiaire rigide 66 à l'intérieur de la cage de manière discontinue avec une ou plusieurs cavités 67. L'élément dissipatif 3 constitué de matériau viscoélastique fonctionne en cisaillement mais aussi partiellement en compression afin de produire une raideur non linéaire lors de l'enfoncement du pied suivant la flèche F1 comme cela a été expliqué précédemment. La fonction élastique est assurée par la cage 58 en matériau métallique, composite ou plastique.

## Revendications

1. Procédé d'atténuation et de filtrage des vibrations transmises à un utilisateur par une chaussure lors de son utilisation, **caractérisé en ce qu'**on interpose entre la semelle intérieure (1) de ladite chaussure en contact avec le pied de l'utilisateur, et la semelle extérieure rigide (2) ou talon rigide en contact avec le sol lors de la marche, au moins un élément élastique (4) assurant une fonction de filtrage et au moins un élément dissipatif (3) assurant une fonction d'amortissement, et afin de limiter les déplacements relatifs entre les deux semelles pour assurer une tenue statique garantissant la rigidité de la chaussure, la raideur de l'ensemble étant non linéaire et dépendante du niveau d'effort appliqué sur la semelle lors du contact sur le sol.

2. Application du procédé selon la revendication 1 à l'atténuation et au filtrage des vibrations entre la semelle intérieure et la semelle extérieure rigide d'une chaussure.

3. Application du procédé selon la revendication 1 à l'atténuation et au filtrage des vibrations dans une guêtre, dans un gant, dans une béquille, dans un fer à cheval, dans des robots mobiles.

4. Dispositif d'atténuation et de filtrage des vibrations transmises à un utilisateur par une chaussure lors de son utilisation, situé dans ladite chaussure entre la semelle intérieure (1) en contact avec le pied de l'utilisateur, et la semelle extérieure rigide (2) ou talon rigide en contact avec le sol, **caractérisé en ce qu'**il est constitué d'au moins un élément élastique (4) fonctionnant en compression et d'au moins un élément dissipatif (3) composé d'un matériau convertisseur d'énergie et fonctionnant en cisaillement et/ou en compression, pour assurer une tenue statique garantissant la rigidité de la chaussure, la raideur de l'ensemble étant non linéaire et dépendante du niveau d'effort appliqué sur la semelle lors du contact sur le sol.

5. Dispositif d'atténuation et de filtrage des vibrations selon la revendication 4, **caractérisé en ce que** l'élément élastique (4) est constitué par un ressort, une lame élastique ou par une pièce en mousse de polymère ou de caoutchouc (5).

6. Dispositif d'atténuation et de filtrage des vibrations selon la revendication 4, **caractérisé en ce que** l'élément dissipatif (3) est constitué par un matériau convertisseur d'énergie mécanique en énergie thermique, en énergie électrique, en énergie magnétique ou en énergie surfacique.

7. Dispositif d'atténuation et de filtrage des vibrations selon la revendication 6, **caractérisé en ce que** le matériau convertisseur d'énergie est constitué de matériaux viscoélastiques ou viscoplastiques, de matériaux piézoélectriques, de matériaux magnétostrictifs ou de matériaux nanoporeux.

8. Dispositif d'atténuation et de filtrage des vibrations selon l'une quelconque des revendications 4 à 7, **caractérisé en ce que** l'élément élastique (4) et l'élément dissipatif (3) sont placés l'un par rapport à l'autre selon une direction quelconque.

9. Dispositif d'atténuation et de filtrage des vibrations selon l'une quelconque des revendications 4 à 8, **caractérisé en ce que** l'élément dissipatif (3) est placé en biais par rapport à l'axe vertical de la chaussure correspondant à l'axe de la jambe de l'utilisateur afin de générer une raideur non-linéaire du dispositif en fonction de l'effort appliqué par le pied.

10. Dispositif d'atténuation et de filtrage des vibrations selon l'une quelconque des revendications 4 à 9, **caractérisé en ce que** l'élément élastique (4) et l'élément dissipatif (3) sont chacun fixés séparément à la semelle intérieure (1) et à la semelle extérieure (2).

11. Dispositif d'atténuation et de filtrage des vibrations selon l'une quelconque des revendications 4 à 10, **caractérisé en ce que** l'élément élastique (4) est fixé entre la semelle intérieure (1) et la semelle extérieure (2), et l'élément dissipatif (3) est fixé à la semelle extérieure (2) et à l'élément élastique (4).

12. Dispositif d'atténuation et de filtrage des vibrations selon l'une quelconque des revendications 4 à 11,
**caractérisé en ce que** l'élément élastique (4) et l'élément dissipatif (3) sont fixés l'un à l'autre entre la semelle intérieure (1) et à la semelle extérieure (2).

13. Dispositif d'atténuation et de filtrage des vibrations selon la revendication 12, **caractérisé en ce que** l'élément élastique (4) est fixé à la semelle intérieure (1) et à la semelle extérieure (2) et l'élément dissipatif (3) est fixé entre la semelle intérieure (1) et l'élément élastique (4).

14. Dispositif d'atténuation et de filtrage des vibrations selon la revendication 12, **caractérisé en ce que** l'élément élastique (4) et l'élément dissipatif (3) sont fixés chacun entre la semelle intérieure (1) et la semelle extérieure (2).

15. Dispositif d'atténuation et de filtrage des vibrations selon la revendication 10, **caractérisé en ce que** l'élément élastique (4) est fixé entre la semelle intérieure (1) et la semelle extérieure (2), l'élément dissipatif (3) étant solidaire uniquement de l'élément élastique (4).

16. Dispositif d'atténuation et de filtrage des vibrations selon la revendication 12, **caractérisé en ce que** l'élément élastique (4) est fixé uniquement à la semelle extérieure (2), l'élément dissipatif (3) étant fixé uniquement entre l'élément élastique (4) et la semelle intérieure (1).

17. Dispositif de filtrage et d'atténuation selon l'une quelconque des revendications 4 à 16, **caractérisé en ce que** l'élément élastique (4) génère une composante de déplacement dans une direction différente de l'enfoncement du pied de l'utilisateur, en sorte que la hauteur du dispositif soit limitée dans la structure du talon ou de la semelle.

18. Dispositif de filtrage et d'atténuation selon la revendication 17, **caractérisé en ce que** l'élément élastique (17) génère un déplacement d'une partie de cet élément dans une direction perpendiculaire à l'enfoncement du pied de l'utilisateur, de façon à faire travailler l'élément dissipatif (3) en cisaillement dans cette direction, mais aussi en compression ce qui génère une raideur non linéaire du dispositif, celle-ci augmentant en fonction de l'effort appliqué par le pied.
